# EUROPEAN PATENT SPECIFICATION

(11) **EP 2 356 362 B1**
(45) Date of publication and mention of the grant of the patent: **09.10.2013**
(21) Application number: 09781750.6
(22) Date of filing: 12.08.2009
(51) Int. Cl.: F16L 1/23

(54) **APPARATUS FOR USE IN LAYING PIPE ON THE SEA FLOOR**
VORRICHTUNG ZUR VERWENDUNG BEIM VERLEGEN VON ROHREN AUF DEM MEERESBODEN
APPAREIL DESTINÉ À ÊTRE UTILISÉ LORS DE LA POSE DE CONDUITES SUR UN FOND MARIN

(30) Priority: 15.08.2008 GB 0814979
(43) Date of publication of application: 17.08.2011
(73) Proprietor: Subsea 7 Limited, Aberdeen, Aberdeenshire AB32 6FE (GB)
(72) Inventor: TAME, Jonathan Richard, Banchory Aberdeenshire AB31 5NZ (GB)
(74) Representative: Lawrence, Richard Anthony
(86) International application number: PCT/EP2009/060437
(87) International publication number: WO 2010/018193

(56) References cited:
- WO-A-2006/085739
- WO-A-2008/041837
- WO-A-2009/147168
- GB-A- 2 019 976
- GB-A- 2 299 646
- NL-A- 8 303 483
- US-A- 4 023 449
- US-A- 5 181 798
- US-B1- 6 910 848

## Description

In laying pipe from a pipelay vessel it is well known that the pipe is subject to torsion and that this induces a residual unrelieved torque in the pipe.

This torque needs to be released before undertaking a pipe joining operation, and/or the attachment of in-line and/or end modules etc. This is particularly the case for in-line modules, which are launched in a preferred orientation relative to the sea floor, as any residual torque in the pipes can adversely affect their alignment for the final lay down process on the sea floor.

Thus there is a need for means which permit the torque to be relieved.

There is also a need for the pipelay vessel to be able to "weather vane" about the pipe without twisting it. This can only be achieved when a pipe end is held in a hold off clamp (HOC), in other words when there is no pipe running up a pipelay system above the HOC.

A current torque release technique involves attaching an Abandonment and Recovery (A&R) winch line via a swivel to the pipe end whilst the latter is retained by clamps in the HOC. The load is then taken up on the A&R winch, the HOC clamps are retracted, and the twist is taken out by the swivel. This approach involves fixing an A&R attachment head to the pipe end by means of high quality welds. This task can take several hours of valuable vessel time and it is not possible to load test this joint prior to use.

An alternative technique is proposed in WO 2009/147168, in which an arrangement, referred to hereinafter as a twister, grips the pipe above the HOC with "bear grips" that rest on a thrust bearing. The HOC can then be released and the twist taken out by rotation of the "bear grips" on the thrust bearing. Prior to releasing the HOC, the thrust bearing can be pre-loaded by a jacking system. This process can also be used to test the load holding power of the "bear grips" which rest on it.

Weather vaning of the pipelay vessel is not specifically addressed by either the A&R based system, or by the twister system, but both are capable of it.

The present invention is concerned with providing an alternative to the A&R and twister systems, and in particular to avoid the need to rig and use the A&R winch system, and thus to decrease the timescales involved.

GB 2019976 discloses an arrangement designed to keep a pipeline position stable even if a ship on which the pipeline end is located moves. A trolley secures the top end of a pipeline with securing wedges - lower parts of the pipeline rest on a slide. The trolley is movable on circular rails on the vessel by rollers. The slide is held on three further sets of rollers on circular rails below platform level, with the slide progressively inclined. The middle set of rollers has a drivable crown gear and gear train attached.

US 5181798 teaches an arrangement designed for use in pipeline repair, allowing ship to change direction while the pipe is being supported. A rotatable turntable on the ship is adapted to hold pipes of different diameter and to rotate them into position for support against the inner diameter of a stinger.

According to one aspect of the present invention there is provided a pipelay vessel comprising a hold off clamp for disposal on the pipelay vessel and comprising a clamping device for securement to a pipe under lay at a position along a lay path, wherein the hold off clamp is adapted for controllable relative rotation with the lay path as a rotation axis while supporting a weight of a pipe being laid on the sea floor from the pipelay vessel, the hold off clamp comprising: a clamping device adapted to clamp and to support the weight of the laid pipe, a housing secured to the pipelay vessel, and an arrangement for providing controllable relative rotation of a clamped pipe relative to the pipelay vessel with the lay path as a rotation axis, the arrangement comprising a drive motor capable of providing predetermined rotation and torsional damping and a brake assembly capable of preventing said relative rotation comprising a brake actuator and disc pads mounted to the housing and co-operable with a projection of the clamping device comprising a brake disc.

The means adapted to provide controllable relative rotation of the clamping means within the housing may comprise thrust bearings via which the clamping means is mounted on the housing.

The drive means may comprise means mounted to the housing and co-operable with means of the clamping means.

The clamping means may be hydraulically operable.

The hold off clamp may include means for releasably connecting the clamping means to a hydraulic supply of the pipelay vessel.

Means may be mounted to the clamping means for co-rotation therewith, for maintaining the clamping means secured to the pipe when the releasable connecting means are disconnected.

The clamping means may comprise a plurality of clamping jaws disposed around the circumference of the pipe in use thereof and operable by clamping cylinders orthogonal to the pipe to grip the pipe.

The clamping means may comprise a plurality of clamping jaws disposed around the circumference of the pipe in use thereof and operable by radius arms pivotably mounted to the clamping jaws and the body of the clamping means, initial grip of the pipe being achieved by pivoting of the radius arms caused by respective operating cylinders, and subsequent grip being maintained by the weight of the pipe.

Mounted to the clamping means and co-rotational therewith may be telemetry means for monitoring the clamping means holding pressure and/or adjusting the drive means.

The clamping means and the housing may be in the form of a split structure to facilitate disposal around the pipe.

In the case of use with a pipe of a pipe-in-pipe construction having an inner pipe and an outer pipe, one said hold off clamp may be adapted to secure the outer pipe and another said hold off clamp may be adapted to support the inner pipe. Alternatively, the hold off clamp may be adapted to secure the outer pipe and a twister arrangement may be provided and employed to secure the inner pipe and adapted to support the weight of the inner pipe.

According to another aspect of the present invention there is provided a method for use in connection with the laying of pipe on the sea floor from a floating pipelay vessel, wherein the pipelay vessel comprises a hold off clamp for disposal on the pipelay vessel and comprising a clamping device for securement to a pipe under lay at a position along a lay path, wherein the hold off clamp further comprises a housing secured to the pipelay vessel, wherein the clamping device is adapted to clamp and to support the weight of the laid pipe, the hold off clamp further comprising an arrangement for providing controllable relative rotation of a clamped pipe relative to the pipelay vessel with the lay path as a rotation axis, the method comprising: clamping the pipe in the clamping device; cutting the pipe above the clamping device so that the laid pipe is supported by the clamping device; and controlling relative rotation of the clamping device with respect to the pipelay vessel with the lay path as a rotation axis.

Relative rotation may be performed and controlled in order to relieve residual torsion in the pipe.

Relative rotation may serve to permit weather vaning of the pipelay vessel about the pipe.

In the case of a pipe-in-pipe construction of pipe having an inner and an outer pipe, the outer pipe may be secured by the housing means and the clamping means, and the method may include the steps of mounting a further device to the pipelay vessel, which further device serves to secure the inner pipe and support its weight.

The further device may comprise a respective housing means and clamping means. Alternatively, the further device may comprise a twister arrangement.

For a better understanding of the invention and to show how the same may be carried into effect, reference will now be made, by way of example, to the accompanying drawings, in which:-
Figure 1 shows schematically the structure of an apparatus (rotatable hold off clamp), in a sectional side view and attached to the pipelay vessel, which is adapted to achieve controlled relative rotation between a pipe and the pipelay vessel, particularly but not exclusively for relieving torque in the pipe, and which is for use in connection with a single pipe;
Figures 2a and 2b show plan views of a rotatable hold off clamp, attached to the pipelay vessel, which has a split structure and indicating by solid lines the structure when closed and by dashed lines the structure when opened, Figure 2a representing a three clamp version and Figure 2b representing a four clamp version;
Figure 3 shows schematically the rotatable hold off clamp of Figure 1 together with a deploying/stowing mechanism, in both the deployed (solid lines) and stowed (dashed lines) positions;
Figure 4a shows an alternative construction of the rotatable hold off clamp which employs self-gripping clamps, and Figures 4b and 4c show respectively specific forms of the jaws of the clamps;
Figure 5 shows schematically elements of the rotatable hold off clamp, with a four clamp arrangement, and the system power and controls, in particular the hydraulic connections;
Figure 6 shows a construction suitable for use with pipe-in-pipe, which employs a twister for the inner pipe, disposed adjacent to a rotatable hold off clamp with the structure illustrated in Figure 1.

During pipe laying operations, in the event that a pipe has to be cut, the pipe end is first gripped at approximately deck level of the pipe laying vessel by a hold off clamp. This retains it against the load of the pipe suspended between it and the sea floor. The latter is a force of the order of two to three hundred tonnes.

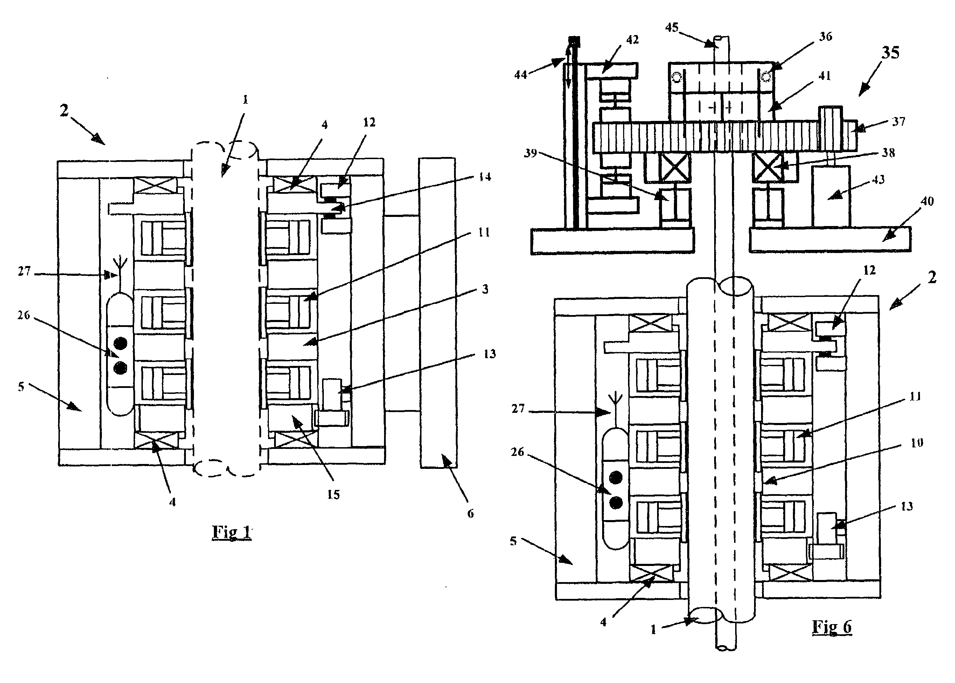

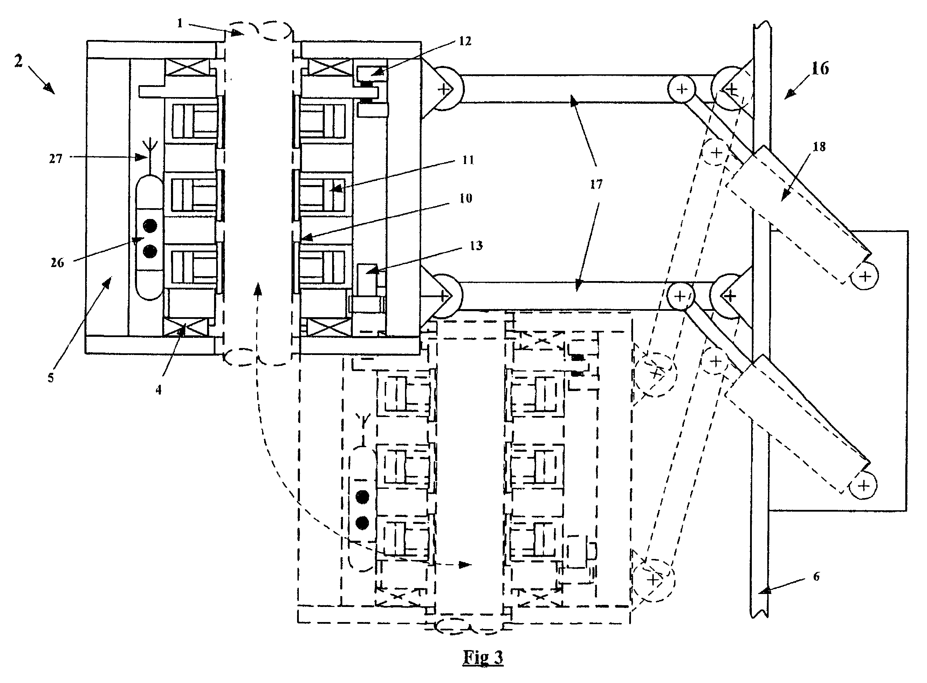

Referring to Figure 1, a pipe 1 can be held by a rotatable hold off clamp 2 which comprises a hold off clamp clamping means 3 mounted on thrust bearings 4, all supported by a housing or chassis 5. The chassis is mounted to the structure of the vessel, illustrated schematically at 6, which may comprise part of a deploying/stowing mechanism described further in connection with Figure 3.

When setting up a pipelay system, it is not always possible to feed the pipe end through the hold off clamp, and thus the rotatable hold off clamp of the present invention has a hinged/split structure so that it can be opened to accept a pipe 1, closed around it, and then locked shut. Such an openable structure will also allow the through passage of smaller items attached to the pipe 1, for example anodes.

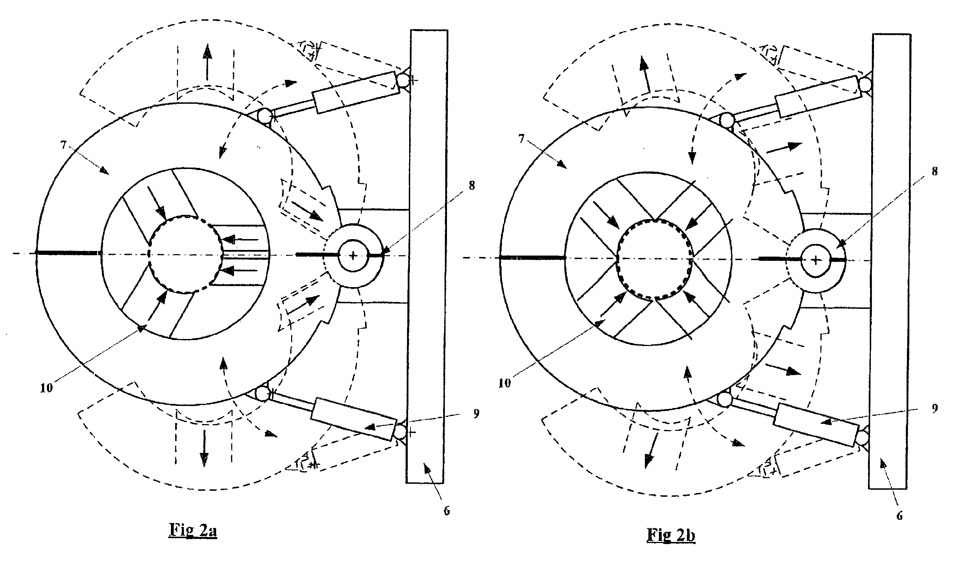

Further details of the hinged/split structure can be appreciated from Figure 2a or 2b which show the closed configuration in solid lines, and the opened configuration in dashed lines, in a plan view.

The hold off clamp comprises two sections 7 with a clamp hinge 8 so that the sections 7 are openable, and is mounted to the vessel structure 6. Hydraulic operating cylinders 9 are illustrated as comprising means for controlling the opening and closing operation of the hold off clamp sections 7.

In order to enable the opening and closing of the hold off clamp, the clamping means 3, the chassis 5 and the thrust bearings 4 will be of a suitably split design. A conventional hold off clamp may also have a split design but does not include the thrust bearings.

Various pipe gripping systems may be employed. In the arrangement illustrated schematically in Figure 2a there are three clamping jaws 10 disposed around the circumference of the pipe to be clamped, and as illustrated in Figure 1 there may be three such sets of clamping jaws disposed along the length of the pipe.

The solid line drawing of Figure 2a shows the clamping jaws in contact with a pipe, whereas the dashed line indicates the clamping jaws retracted.

The clamping jaws are operated by hydraulic clamping cylinders 11 in the embodiment illustrated in Figure 1, and the clamping jaws 10 are positioned orthogonally to and around the pipe. In the case of a set of three clamping jaws around the pipe, one clamp will be of a split construction and this is adjacent to the hinge 8 and provides the base against which the pipe is pushed by the other two clamping jaws.

In an alternative arrangement the set of clamping jaws comprises four clamping jaws 10, as illustrated in Figure 2b, in which case no clamping jaw which is split is required, thus facilitating manufacture and operation.

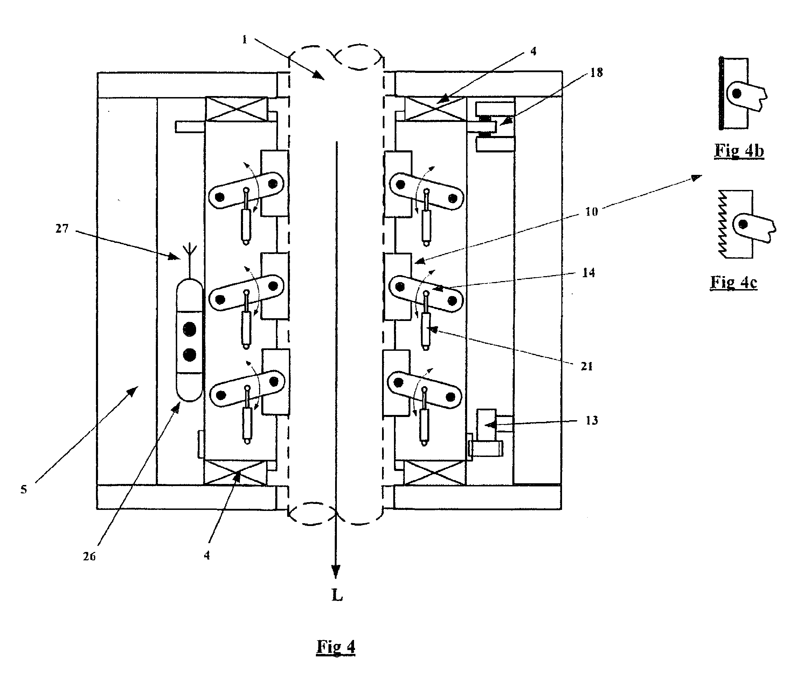

The clamping jaws may be plastic/rubber lined or have teeth as illustrated in Figures 4b and 4c in connection with an alternative type of structure.

As discussed above, the clamping means 3 is mounted on the chassis 5 via thrust bearings 4. The thrust bearings 4 mean that the clamping means 3 is free to rotate relative to the chassis 5 and the vessel 6 on which it is mounted, in order to remove the residual twist in the pipe and allow the vessel to "weather vane" about the pipe.

The torque relief operation will be controlled by a brake assembly 12, and/or a rotary damper and drive motor 13, so that stored energy in the pipe can be relieved in a controllable manner.

An annular projection 14 of the clamping means 3 may form a brake disc in the illustrated case of a disc brake assembly. The rotation characteristics of the clamping means 3 during pipe torque release can be controlled by the rotary damper 13 which engages with a toothed annular section 15 of the clamping means 3, which can alternatively be driven by the drive motor incorporated in the rotary damper. This also allows the pipe 1 to be twisted if required. Such a drive facility permits the alignment of pipe joint faces for welding, for example.

The rotatable hold off clamp 2 may be mounted so that it can be swung clear of the line (lay path) adopted by a pipe during laying, in order to allow the passage of large items that may be attached to the pipe, for example in-line modules, pipeline end terminations (PLETs) etc.

Figure 3 shows a deploying/stowing mechanism for the rotatable hold off clamp 2. The solid lines of the drawings illustrate the deployed position and the dashed lines indicate the stowed position. Whereas in Figure 1 the rotatable hold off clamp 2 is illustrated as fixed directly to the vessel structure 6, in Figure 3 there is illustrated an intermediate deploying/stowing mechanism 16 comprising swinging arms 17 attached to the chassis 5 and the vessel structure 6 and positions of which are controlled by operating cylinders 18 which cause the rotatable hold off clamp to be moved between the deployed and stowed positions.

In Figure 4a there is shown an alternative clamping arrangement to the orthogonal arrangements illustrated in Figures 2a and 2b.

Three or four sets of jaws may be set around the pipe 1 as was described for the orthogonal clamps, but in this case the jaws are connected to radius arms 19 which are pivotably mounted at one end to the jaw per se 10 and at the other end to body 20 of the clamping means. The jaws 10 are pulled onto the pipe 1 by operating cylinders 21 to create an initial grip. The jaws 10 then work in combination with the radius arms 19 so that the weight of the pipe 1 acting on the jaws increases the grip in the correct proportion to prevent slip, but at the same time over-stressing of the pipe wall is avoided. Consequently having generated the initial grip, further input from the operating cylinders 21 is not required. The jaws 10 may be plastic/rubber lined as illustrated schematically in Figure 4b, or have teeth as illustrated schematically in Figure 4c.

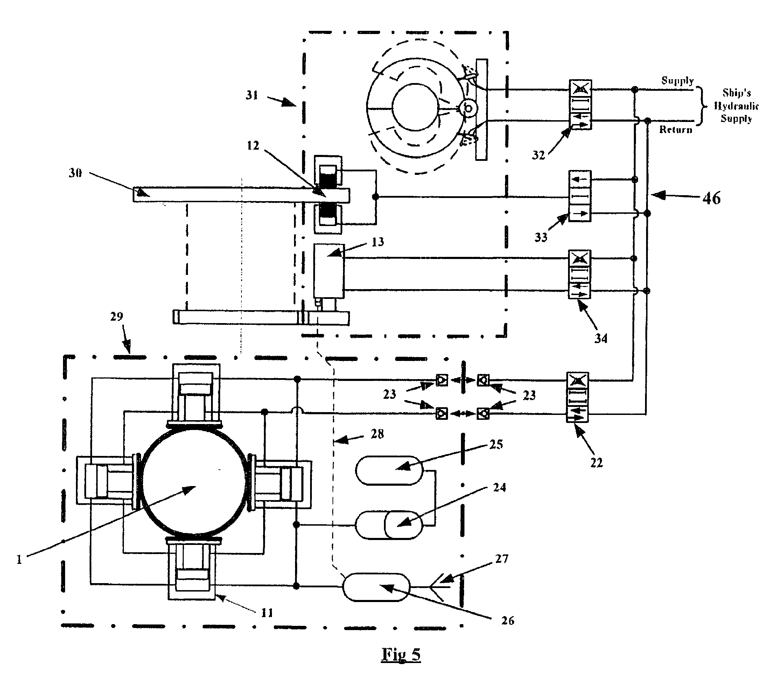

The rotatable hold off clamp 2 may be driven by hydraulic power supplied over an hydraulic circuit 46 from the lay vessel, as illustrated schematically in Figure 5. An orthogonal clamp arrangement is illustrated in Figure 5, but the arrangement for the self gripping jaws of Figure 4a will be similar, except that the hydraulic fluid will be directed to the radius arm operating cylinders 21, rather than the clamping cylinders 11, from a clamping control valve 22 whose operating position determines whether the pipe is gripped or released, the clamping control valve 22 additionally having an off position.

Since it may be necessary for "weather vaning" for the relative rotation between the pipe and the vessel to be 360° degrees or more, rather than having hydraulic slip rings for a rotatable assembly 30 including the clamping means 3, it can be equipped with "quick connect" hydraulic couplings 23. These can be "connected" when necessary to operate the damping functions, and then "broken" so that the rotatable clamping means 3 is free to rotate 360 degrees or more. At this time the clamping force may be maintained by a hydraulic accumulator 24 pressurised by a pressurising cylinder 25, for example using nitrogen gas, both of which will also be mounted on the rotatable assembly. The hydraulic circuit 46 is connected to an instrumentation module 26 so that the clamp holding pressure can be monitored via telemetry using, for example, an aerial 27, particularly in the case where the quick connect hydraulic couplings are employed and the clamping means 3 is required to rotate independently.

As indicated in Figure 5, the telemetry module may be connected to the rotary damper 13 by a control line 28 in order to control the torsion damping and rotation as required. This control line may be hydraulic or electrical.

The schematic illustration in Figure 5 indicates within box 29 those elements which are mounted on the hold off clamp rotatable assembly 30, and within box 31 those elements mounted on the hold off clamp chassis 5, in particular the brake assembly 12 and the rotary damper and drive motor 13.

The vessel's (ship's) hydraulic supply (not shown) is connected to the operating cylinders 9 via hold off clamp open/shut control valve 32, the brake assembly 12 via a brake control on/release/off valve 33, and to the rotary damper and drive motor 13 via a drive control left/right/off valve 34. The rotation of the rotatable assembly can be controlled by the brake and rotary damper. The brake enables locking/releasing of the rotatable assembly as and when required, and the rotary damper can provide a controlled rate of rotation and minimise post release oscillations (bounce). The rotary damper can incorporate the drive motor, or it can be a separate unit, which drive motor can be used for positioning the rotary assembly in azimuth as required.

In the case of a pipe-in-pipe construction of pipe having an inner pipe and an outer pipe, the outer pipe 1 may be secured in a rotatable hold off clamp 2, whilst the inner pipe may be secured by a twister 35, as illustrated in Figure 6 in which a twister is located on a support structure 40 mounted to the pipelay vessel and secured to an inner pipe 45.

The twister 35 comprises a pair of "bear grips" 36, constituting a securing means, in particular a clamping means which is disposed on the pipelay vessel and clamped to the inner pipe 45. The clamping means 36 is such as to be able to support the weight of the inner pipe suspended between it and the sea floor. These bear grips or clamping means 36 rest on a turntable 37 which is supported on a thrust bearing 38 rated to carry the weight of the inner pipe. The thrust bearing 38 is supported on pipe tensioning cylinders 39 whose lower ends are fixed to a top surface of the support structure 40 on which all of the twister components are mounted.

The turntable 37 is connected to the clamping means 36, and thence to the inner pipe 45, by drive pins 41, and is rotationally lockable by a brake assembly 42 for which it forms a brake disc. The rotation characteristics of the turntable during pipe torque release can be controlled by a torsional damper 43. Whilst a disc brake arrangement is particularly described, other brake types (non-disc) could be employed.

The turntable 37 also serves as a drive wheel which can be rotated by a drive motor incorporated in the torsional damping unit 43. This allows the inner pipe 45 to be twisted, thus facilitating, for instance, the alignment of pipe joint faces for welding.

The pipe-tensioning cylinders 39 below the thrust bearing 38 provide a means whereby the latter can be jacked up and thus pre-loaded to the pipe weight and thus protect the bearing 38 from shock loads. It should be noted that the majority of the components of the twister will be in two inter-connecting halves so that the unit can be installed around a continuous pipe, and opened to allow the passage of large items.

Brake assembly guide rods 44 serve to allow the brake assembly 42 to move up and down with the pipe 45 and the turntable 37 as the axial load is applied/removed via the cylinders 39.

The elements of the twister other than the clamping means 36 comprise a mounting means for the clamping means adapted to provide controlled relative rotation of the clamping means with respect to the pipe lay vessel and around the lay path, in particular these elements are the turntable 37, the thrust bearing 38, the support structure 40, the brake assembly 42 and the drive means 43, which acts as a drive motor or a torsional damping unit.

When working with the pipe-in-pipe construction it is necessary to be able to fix the inner pipe 45 to the outer pipe 1, so that when the inner pipe is cut, it is prevented from falling irretrievably down inside the outer pipe.

In general, it is considered that, unlike the outer pipe, inner pipe torsion very often does not manifest itself, due to friction with the outer pipe, so that independent torsion release is less necessary, with the result that in this case, once the torque has been released from the outer pipe, the two pipes can be locked together using a pair of slip wedge elements, as discussed in further detail in the above-mentioned co-pending application.

Particularly when the pipelay moves into ever deeper water, it may be found that the inner pipe has also acquired a residual torsion, and this may or may not match the outer pipe. It may be more, less or even of the opposite rotation, in which case the slip elements are not required.

Various methods of operation using the rotary hold off clamp described above will now be described.

In the case of pipe laying setup, for a single pipe 1 and the pipe free end being available, if necessary the rotatable hold off clamp 2 will be deployed into the line of lay (lay path), as discussed above with reference to Figure 3. The rotatable assembly 3 is then rotated as necessary and the brake assembly 12 applied by appropriate control of the brake valve 33. The clamping cylinders 11 are then connected to the hydraulic supply via the quick connects 23, and the clamps are released by appropriate control of the clamping control valve 22, so that the pipe 1 can be led up/down through the rotary hold off clamp 2.

The rotatable hold off clamp is then ready for use, the hydraulic supply to the clamping means 3 remaining connected/being disconnected depending on the intended use.

If no free end of the pipe is available, then the procedure for pipe laying setup is as follows. If necessary the rotary hold off clamp 2 is deployed into the line of lay (lay path), the clamping means is rotated as necessary, the brake applied and the clamps retracted (released). Then the rotatable hold off clamp is hinged open, the pipe fed in between the two halves 7, which are then powered shut by the operating cylinders 9, and the halves locked together. The rotatable hold off clamp 2 is then ready for use, the hydraulic supply to the rotatable assembly 3 remaining connected/being disconnected depending on the intended use.

A number of pipelay operations, for example the insertion of a mid line module, a pipeline end termination etc., require that the pipe be cut so that a joint can be made with the item being inserted or attached. This cannot safely be done without first relieving the residual torque locked up in the pipe.

To do this, the pipe 1 is disposed in the rotatable hold off clamp 2 as described above and held therein by application of hydraulic pressure to the clamping cylinders 11 to cause the clamping jaws to grip the pipe 1 and the brake assembly 12 applied. With the pipe held in the rotatable hold off clamp, the pipe is cut above it, and then the upper part retracted to give a clear working space above the pipe end in the clamping jaws.

To remove the residual torque, the rotary damper 13 set to a predetermined figure commensurate with the pipe type, depth of operation, length of lay etc.

The brake assembly 12 is then released, and the pipe 1 untwists under the control of the rotary damper 13. The brake assembly 12 can be used to augment the rotary damper function by remaining partially applied.

With the pipe end remaining gripped in the rotatable hold off clamp, the appropriate joining operation is carried out.

Subsequently the clamping jaws are released, by appropriate control of the valve 22, the clamp sections 7 unlocked and swung apart, and if necessary the rotatable hold off clamp moved to its stowed position, the dotted line position shown in Figure 3. Laying of the pipe to the sea bed then recommences.

In the case of a pipe-in-pipe construction the operation of the rotatable hold off clamp 2 for gripping the pipe 1 will correspond with that described above, and the twister 35 will be employed in connection with the inner pipe 45.

It will be necessary to deploy the twister 35 in a position above the rotatable hold off clamp 2, and open the twister structure if no free end of the pipe-in-pipe is available. The inner pipe will be clamped by the bear grips 36 and depending on the depth of water, slip wedges and operation of the twister will be involved in order to allow the inner pipe to untwist if necessary. In deep water the twister 35 will relieve the torsion on the inner pipe 48, whilst the rotary hold off clamp 2 will relieve the torsion in the outer pipe. Once this has been achieved the necessary jointing operations can be carried out and the twister and the hold off clamp moved to a stowed position as necessary.

Whilst a twister has been described for use with the inner pipe of a pipe-in-pipe construction, this is not the only possibility, for example another rotatable hold off clamp could be disposed above clamp 2 in a position occupied in Figure 6 by the twister 35. In the case of use of two rotatable hold off clamps, the hydraulics arrangement would need to be duplicated, with various functions on each clamp capable of control individually and/or simultaneously as appropriate. In the case of a rotatable hold off clamp and a twister, in order for the vessel to weather vane, the brakes would have to be released simultaneously on the rotatable hold off clamp and the twister, and the drive motors/dampers of both would have to be in the minimal damping/non driving mode.

As will be apparent from the above description, in the proposed rotatable hold off clamp 2, the torque release elements are inbuilt, and so no additional equipment is required for a single piep 1, such as is the case with the twister in addition to the standard HOC as described above. The hold off clamp provides the functions of clamping and torsion release. This results in a more compact unit, and the number of operational steps is reduced, thus making for a quicker de-twisting operation as well as facilitating installation on the lay vessel.

Having adequate pipe holding power is intrinsic to the design of the rotatable hold off clamp, and so pre-use load testing which is necessary for a twister arrangement, for example, at every joining operation is not required.

The need to rig and use the A&R system is avoided, together with the need to make high quality welds for attaching the A&R pad eye.

By virtue of the provision of the hydraulic accumulator 24 and its pressurising cylinder 25 which are mounted on the rotatable assembly 30, the clamping force on the pipe 1 can be maintained whilst the vessel weather vanes around the pipe as a result of the rotation permitted by the thrust bearings 4 within the chassis 5 which is mounted to the vessel. In practice, because of the limited thruster power on the lay vessel, the amount of weather vaning permitted will actually be limited to a few degrees, for example ± 5 degrees. This is because if the lay vessel should end up at, say, 90 degrees to the pipe, then in order to stay in position, and maintain the pipe tension, the thrusters would have to be powerful enough to balance the environmental forces (wind, waves, current etc.) acting broadside on. Any other angle down to zero degrees would of course involve forces in proportion.

## Claims

1. A pipelay vessel comprising a hold off clamp for disposal on the pipelay vessel and comprising a clamping device for securement to a pipe under lay at a position along a lay path, wherein the hold off clamp is adapted for controllable relative rotation with the lay path as a rotation axis while supporting a weight of a pipe (1) being laid on the sea floor from the pipelay vessel (6), the hold off clamp comprising:
a clamping device (3) adapted to clamp and to support the weight of the laid pipe (1),
a housing (5) secured to the pipelay vessel, and
an arrangement (4, 12, 13) for providing controllable relative rotation of a clamped pipe (1) relative to the pipelay vessel with the lay path as a rotation axis, the arrangement comprising a drive motor (13) capable of providing predetermined rotation and torsional damping; **characterised in that**
the arrangement further comprises a brake assembly (12) capable of preventing said relative rotation, wherein the brake assembly (12) comprises a brake actuator and disc pads mounted to the housing and co-operable with a projection (14) of the clamping device comprising a brake disc.

2. A pipelay vessel as claimed in Claim 1, wherein the arrangement to provide controllable relative rotation of the clamping device (3) within the housing (5) further comprises thrust bearings (4) via which the clamping device is mounted on the housing (5).

3. A pipelay vessel as claimed in any one of the preceding claims, wherein the clamping device is hydraulically operable.

4. A pipelay vessel as claimed in Claim 3, wherein the hold off clamp includes connecting elements (23) for releasably connecting the clamping device (3) to a hydraulic supply of the pipelay vessel.

5. A pipelay vessel as claimed in Claim 4, further including a hydraulic accumulator (24) mounted to the clamping device for co-rotation therewith, for maintaining the clamping device secured to the pipe when the releasable connecting elements are disconnected.

6. A pipelay vessel as claimed in any one of Claims 3 to 5, wherein the clamping device comprises a plurality of clamping jaws (10) disposed around the circumference of the pipe in use thereof and operable by clamping cylinders (11) orthogonal to the pipe to grip the pipe.

7. A pipelay vessel as claimed in Claim 3 or Claim 4, wherein the clamping device comprises a plurality of clamping jaws (10) disposed around the circumference of the pipe in use thereof and operable by radius arms (19) pivotably mounted to the clamping jaws and a body (20) of the clamping device, adapted such that initial grip of the pipe is achieved by pivoting of the radius arms on operataion of respective operating cylinders (21), and such that subsequent grip is maintained in proportion to the weight of the pipe.

8. A pipelay vessel as claimed in Claim 3, wherein a telemetry device (26, 27) for monitoring the clamping device holding pressure and/or for adjusting the drive motor (13) is mounted to the clamping means to be co-rotational therewith.

9. A pipelay vessel as claimed in any one of the preceding claims, wherein the clamping device (3) and the housing (5) are both formed in a split structure to facilitate disposal around the pipe.

10. A pipelay vessel as claimed in any one of the preceding claims and for use with a pipe of a pipe-in-pipe construction having an inner pipe and an outer pipe, wherein the hold off clamp is adapted to secure the outer pipe and a second hold off clamp is adapted to support the inner pipe.

11. A pipelay vessel as claimed in any one of Claims 1 to 9 and for use with a pipe of a pipe-in-pipe construction having an inner pipe and an outer pipe, wherein the hold off clamp is adapted to secure the outer pipe and a twister arrangement is provided and employed to secure the inner pipe and adapted to support the weight of the inner pipe wherein the twister arrangement comprises clamping means resting on a turntable supported by a thrust bearing.

12. A method for use in connection with the laying of pipe (1) on the sea floor from a floating pipelay vessel (6), wherein the pipelay vessel (6) comprises a hold off clamp for disposal on the pipelay vessel and comprising a clamping device for securement to a pipe under lay at a position along a lay path, wherein the hold off clamp further comprises a housing secured to the pipelay vessel, wherein the clamping device is adapted to clamp and to support the weight of the laid pipe, the hold off clamp further comprising an arrangement for providing controllable relative rotation of a clamped pipe relative to the pipelay vessel with the lay path as a rotation axis, the method comprising:
clamping the pipe (1) in the clamping device (3);
cutting the pipe (1) above the clamping device so that the laid pipe is supported by the clamping device; and
controlling relative rotation of the clamping device with respect to the pipelay vessel with the lay path as a rotation axis.

13. A method as claimed in Claim 12, wherein relative rotation is performed and controlled in order to relieve residual torsion in the pipe.

14. A method as claimed in Claim 12, wherein the relative rotation serves to permit weather vaning of the pipelay vessel about the pipe.

15. A method as claimed in Claim 12 and for use with a pipe-in-pipe construction of pipe having an inner pipe and an outer pipe, wherein the outer pipe is secured by the housing and the clamping device, and including the steps of mounting a further device to the pipelay vessel, which further device serves to secure the inner pipe and support its weight.

16. A method as claimed in Claim 12 or Claim 13, further comprising after controlling relative rotation of the clamping device with respect to the pipelay vessel, joining a module to the laid pipe supported by the clamping device.

17. A method as claimed in Claim 16, further comprising supporting the weight of the laid pipe and the accessory from pipelaying apparatus of the pipelaying vessel, releasing the clamping means and resuming pipelay.

## Patentansprüche

1. Rohrlegeschiff, mit einer Fernhaltehalterung zur Anordnung auf dem Rohrlegeschiff mit einer Haltevorrichtung zur Sicherung an einer Rohrleitung beim Verlegen in einer Position entlang eines Verlegeweges, wobei die Fernhaltehalterung für eine steuerbare relative Drehung mit dem Verlegeweg als Drehachse bei gleichzeitigem Abstützen eines Gewichts einer Rohrleitung (1), die vom Rohrlegeschiff (6) auf dem Meeresboden verlegt werden soll, eingerichtet ist, wobei die Fernhaltehalterung Folgendes umfasst:
eine Haltevorrichtung (3), die dafür eingerichtet ist, das Gewicht der verlegten Rohrleitung (1) zu halten und abzustützen,
ein Gehäuse (5), das am Rohrlegeschiff gesichert ist, und
eine Anordnung (4, 12, 13) zum Bereitstellen einer steuerbaren relativen Drehung einer gehaltenen Rohrleitung (1) im Verhältnis zum Rohrlegeschiff mit dem Verlegeweg als Drehachse, wobei die Anordnung einen Antriebsmotor (13) umfasst, der in der Lage ist, eine zuvor festgelegte Drehung und eine Torsionsdämpfung bereitzustellen, **dadurch gekennzeichnet, dass**
die Anordnung ferner eine Bremsbaugruppe (12) umfasst, die in der Lage ist, die relative Drehung zu verhindern, wobei die Bremsbaugruppe (12) einen Bremszylinder und Bremsscheibenbeläge umfasst, die an das Gehäuse montiert sind und mit einer Auskragung (14) der Haltevorrichtung zusammenarbeiten können, die eine Bremsscheibe umfasst.

2. Rohrlegeschiff nach Anspruch 1, wobei die Anordnung zum Bereitstellen einer steuerbaren relativen Drehung der Haltevorrichtung (3) in dem Gehäuse (5) ferner Axiallager (4) umfasst, mittels derer die Haltevorrichtung an das Gehäuse (5) montiert ist.

3. Rohrlegeschiff nach einem der vorhergehenden Ansprüche, wobei die Haltevorrichtung hydraulisch betätigt werden kann.

4. Rohrlegeschiff nach Anspruch 3, wobei die Fernhaltehalterung Verbindungselemente (23) zum lösbaren Verbinden der Haltevorrichtung (3) mit einer Hydraulikzufuhr des Rohrlegeschiffes beinhaltet.

5. Rohrlegeschiff nach Anspruch 4, ferner einen Hydrospeicher (24) umfassend, der an die Haltevorrichtung montiert ist, um sich mit dieser gleichzeitig zu drehen, um die Haltevorrichtung an der Rohrleitung gesichert zu halten, wenn die lösbaren Verbindungselemente abgekoppelt werden.

6. Rohrlegeschiff nach einem der Ansprüche 3 bis 5, wobei die Haltevorrichtung mehrere Spannbacken (10) umfasst, die rings um den Umfang der in Gebrauch befindlichen Rohrleitung angeordnet sind und durch senkrecht zur Rohrleitung gelegene Haltezylinder (11) betätigt werden können, um die Rohrleitung zu erfassen.

7. Rohrlegeschiff nach Anspruch 3 oder Anspruch 4, wobei die Haltevorrichtung mehrere Spannbacken (10) umfasst, die rings um den Umfang der in Gebrauch befindlichen Rohrleitung angeordnet sind und durch Führungslenker (19) betätigt werden können, die schwenkbar an die Spannbacken und einen Körper (20) der Haltevorrichtung montiert sind und die derart eingerichtet sind, dass ein anfängliches Erfassen der Rohrleitung erreicht wird, indem die Führungslenker bei der Betätigung entsprechender Betätigungszylinder (21) geschwenkt werden, und derart, dass das nachfolgende Erfassen im Verhältnis zum Gewicht der Rohrleitung gehalten wird.

8. Rohrlegeschiff nach Anspruch 3, wobei ein Fernmessgerät (26, 27) zum Überwachen des Haltedrucks der Haltevorrichtung und/oder zum Justieren des Antriebsmotors (13) an das Haltemittel montiert ist, so dass es sich mit diesem gleichzeitig dreht.

9. Rohrlegeschiff nach einem der vorhergehenden Ansprüche, wobei die Haltevorrichtung (3) und das Gehäuse (5) beide in einer geteilten Struktur gebildet sind, um das Anordnen rings um die Rohrleitung zu erleichtern.

10. Rohrlegeschiff nach einem der vorhergehenden Ansprüche und zur Verwendung mit einer Rohrleitung einer Rohr-in-Rohr-Konstruktion mit einer inneren Rohrleitung und einer äußeren Rohrleitung, wobei die Fernhaltehalterung dafür eingerichtet ist, die äußere Rohrleitung zu sichern und eine zweite Fernhaltehalterung dafür eingerichtet ist, die innere Rohrleitung abzustützen.

11. Rohrlegeschiff nach einem der Ansprüche 1 bis 9 und zur Verwendung mit einer Rohrleitung einer Rohr-in-Rohr-Konstruktion mit einer inneren Rohrleitung und einer äußeren Rohrleitung, wobei die Fernhaltehalterung dafür eingerichtet ist, die äußere Rohrleitung zu sichern, und eine Verwindungsanordnung bereitgestellt ist und verwendet wird, um die innere Rohrleitung zu sichern, und die dafür eingerichtet ist, das Gewicht der inneren Rohrleitung abzustützen, wobei die Verwindungsanordnung ein Haltemittel umfasst, das auf einem Drehtisch ruht, der von einem Axiallager abgestützt wird.

12. Verfahren zur Verwendung in Verbindung mit dem Verlegen einer Rohrleitung (1) auf dem Meeresboden von einem schwimmenden Rohrlegeschiff (6) aus, wobei das Rohrlegeschiff (6) eine Fernhaltehalterung zur Anordnung auf dem Rohrlegeschiff mit einer Haltevorrichtung zur Sicherung an einer Rohrleitung beim Verlegen in einer Position entlang eines Verlegeweges umfasst, wobei die Fernhaltehalterung ferner ein Gehäuse umfasst, das am Rohrlegeschiff gesichert ist, wobei die Haltevorrichtung dafür eingerichtet ist, das Gewicht der verlegten Rohrleitung zu halten und abzustützen, wobei die Fernhaltehalterung ferner eine Anordnung zum Bereitstellen einer steuerbaren relativen Drehung einer gehaltenen Rohrleitung im Verhältnis zum Rohrlegeschiff mit dem Verlegeweg als Drehachse umfasst, wobei das Verfahren Folgendes umfasst:
Halten der Rohrleitung (1) in der Haltevorrichtung (3),
Schneiden der Rohrleitung (1) über der Haltevorrichtung derart, dass die verlegte Leitung von der Haltevorrichtung abgestützt wird, und
Steuern einer relativen Drehung der Haltevorrichtung im Verhältnis zum Rohrlegeschiff mit dem Verlegeweg als Drehachse.

13. Verfahren nach Anspruch 12, wobei eine relative Drehung ausgeführt und gesteuert wird, um eine Restverwindung der Rohrleitung abzubauen.

14. Verfahren nach Anspruch 12, wobei die relative Drehung dazu dient, eine Bewegung des Rohrlegeschiffes um die Rohrleitung nach Art einer Wetterfahne zu ermöglichen.

15. Verfahren nach Anspruch 12 und zur Verwendung mit einer Rohrleitung einer Rohr-in-Rohr-Konstruktion mit einer inneren Rohrleitung und einer äußeren Rohrleitung, wobei die äußere Rohrleitung durch das Gehäuse und die Haltevorrichtung gesichert wird, und die Schritte des Montierens einer weiteren Vorrichtung an das Rohrlegeschiff beinhaltend, wobei die weitere Vorrichtung dazu dient, die innere Rohrleitung zu sichern und deren Gewicht abzustützen.

16. Verfahren nach Anspruch 12 oder 13, ferner nach dem Steuern einer relativen Drehung der Haltevorrichtung im Verhältnis zum Rohrlegeschiff das Anbinden eines Moduls an die verlegte, von der Haltevorrichtung abgestützte Rohrleitung umfassend.

17. Verfahren nach Anspruch 16, ferner das Abstützen des Gewichts der verlegten Rohrleitung und des Zubehörs der Rohrlegevorrichtung des Rohrlegeschiffes, das Lösen des Haltemittels und den Neubeginn des Rohrlegens umfassend.

## Revendications

1. Navire de pose de conduites comprenant une pince de retenue à disposer sur le navire de pose de conduites et comprenant un dispositif de serrage pour fixation à une conduite posée dans une position le long d'un chemin de pose, dans lequel la pince de retenue est adaptée pour une rotation relative réglable avec le chemin de pose en tant qu'axe de rotation tout en supportant un poids d'une conduite (1) qui est posée sur le fond marin depuis le navire de pose de conduites (6), la pince de retenue comprenant :
un dispositif de serrage (3) adapté pour serrer et supporter le poids de la conduite posée (1),
un logement (5) fixé au navire de pose de conduites, et
un agencement (4, 12, 13) pour fournir une rotation relative réglable d'une conduite serrée (1) par rapport au navire de pose de conduites avec le chemin de pose en tant qu'axe de rotation, l'agencement comprenant un moteur d'entraînement (13) capable de fournir une rotation prédéterminée et une atténuation de torsion ; **caractérisé en ce que**
l'agencement comprend en outre un ensemble de freinage (12) capable d'empêcher ladite rotation relative, dans lequel l'ensemble de freinage (12) comprend un actionneur de freinage et des plaquettes montés sur le logement et pouvant coopérer avec une saillie (14) du dispositif de serrage comprenant un disque de freinage.

2. Navire de pose de conduites selon la revendication 1, dans lequel l'agencement pour fournir une rotation relative réglable du dispositif de serrage (3) dans le logement (5) comprend en outre des paliers de butée (4) via lesquels le dispositif de serrage est monté sur le logement (5).

3. Navire de pose de conduites selon l'une quelconque des revendications précédentes, dans lequel le dispositif de serrage est manoeuvrable hydrauliquement.

4. Navire de pose de conduites selon la revendication 3, dans lequel la pince de retenue comprend des éléments connecteurs (23) pour connecter de manière amovible le dispositif de serrage (3) à une alimentation hydraulique du navire de pose de conduites.

5. Navire de pose de conduites selon la revendication 4, comprenant en outre un accumulateur hydraulique (24) monté sur le dispositif de serrage pour rotation avec celui-ci, pour maintenir le dispositif de serrage fixé à la conduite lorsque les éléments connecteurs amovibles sont déconnectés.

6. Navire de pose de conduites selon l'une quelconque des revendications 3 à 5, dans lequel le dispositif de serrage comprend une pluralité de mâchoires de serrage (10) disposées autour de la circonférence de la conduite lors de l'utilisation de celui-ci et manoeuvrables par des vérins de serrage (11) orthogonaux à la conduite pour saisir la conduite.

7. Navire de pose de conduites selon la revendication 3 ou la revendication 4, dans lequel le dispositif de serrage comprend une pluralité de mâchoires de serrage (10) disposées autour de la circonférence de la conduite lors de l'utilisation de celui-ci et manoeuvrables par des bras radiaux (19) montés en pivotement sur les mâchoires de serrage et un corps (20) du dispositif de serrage, adaptés de telle sorte que la saisie initiale de la conduite est obtenue par pivotement des bras radiaux lors de la manoeuvre de cylindres de commande respectifs (21), et de telle sorte que la saisie suivante est maintenue proportionnellement au poids de la conduite.

8. Navire de pose de conduites selon la revendication 3, dans lequel un dispositif de télémétrie (26, 27) pour surveiller la pression de retenue de dispositif de serrage et/ou pour ajuster le moteur d'entraînement (13) est monté sur le moyen de serrage pour rotation avec celui-ci.

9. Navire de pose de conduites selon l'une quelconque des revendications précédentes, dans lequel le dispositif de serrage (3) et le logement (5) sont tous deux formés dans une structure séparée pour faciliter la disposition autour de la conduite.

10. Navire de pose de conduites selon l'une quelconque des revendications précédentes et à utiliser avec une conduite à système conduite dans conduite ayant une conduite interne et une conduite externe, dans lequel la pince de retenue est adaptée pour fixer la conduite externe et une seconde pince de retenue est adaptée pour supporter la conduite interne.

11. Navire de pose de conduites selon l'une quelconque des revendications 1 à 9 et à utiliser avec une conduite à système conduite dans conduite ayant une conduite interne et une conduite externe, dans lequel la pince de retenue est adaptée pour fixer la conduite externe et un agencement de torsion est prévu et employé pour fixer la conduite interne et adapté pour supporter le poids de la conduite interne, dans lequel l'agencement de torsion comprend un moyen de serrage reposant sur une plaque tournante supportée par un palier de butée.

12. Procédé pour une utilisation conjointement avec la pose d'une conduite (1) sur le fond marin depuis un navire de pose de conduites flottant (6), dans lequel le navire de pose de conduites (6) comprend une pince de retenue à disposer sur le navire de pose de conduites et comprenant un dispositif de serrage à fixer à une conduite posée dans une position le long d'un chemin de pose, dans lequel la pince de retenue comprend en outre un logement fixée au navire de pose de conduites, dans lequel le dispositif de serrage est adapté pour serrer et supporter le poids de la conduite posée, la pince de retenue comprenant en outre un agencement pour fournir une rotation relative réglable d'une conduite serrée par rapport au navire de pose de conduites avec le chemin de pose en tant qu'axe de rotation, le procédé comprenant :
le serrage de la conduite (1) dans le dispositif de serrage (3);
la découpe de la conduite (1) au-dessus du dispositif de serrage de sorte que la conduite posée est supportée par le dispositif de serrage ; et
le réglage d'une rotation relative du dispositif de serrage par rapport au navire de pose de conduites avec le chemin de pose en tant qu'axe de rotation.

13. Procédé selon la revendication 12, dans lequel une rotation relative est effectuée et réglée afin de relâcher une torsion résiduelle dans la conduite.

14. Procédé selon la revendication 12, dans lequel la rotation relative sert à permettre un mouvement de girouette du navire de pose de conduites autour de la conduite.

15. Procédé selon la revendication 12 et à utiliser avec un système conduite dans conduite d'une conduite ayant une conduite interne et une conduite externe, dans lequel la conduite externe est fixée par le logement et le dispositif de serrage, et comprenant les étapes de montage d'un autre dispositif sur le navire de pose de conduites, lequel autre dispositif sert à fixer la conduite interne et à supporter son poids.

16. Procédé selon la revendication 12 ou la revendication 13, comprenant en outre après le réglage d'une rotation relative du dispositif de serrage par rapport au navire de pose de conduites l'assemblage d'un module sur la conduite posée supportée par le dispositif de serrage.

17. Procédé selon la revendication 16, comprenant en outre le support du poids de la conduite posée et de l'équipement de l'appareil de pose de conduites du navire de pose de conduites, la libération du moyen de serrage et la reprise de la pose de conduites.
